# EUROPÄISCHE PATENTSCHRIFT

(11) **EP 2 888 604 B1**
(45) Veröffentlichungstag und Bekanntmachung des Hinweises auf die Patenterteilung: **24.07.2019**
(21) Anmeldenummer: 13765623.7
(22) Anmeldetag: 09.08.2013
(51) Int. Cl.: G01S 17/93, G06K 9/00, G01S 19/49

(54) **VERFAHREN ZUR BESTIMMUNG EINES FAHRSPURVERLAUFS FÜR EIN FAHRZEUG**
METHOD FOR DETERMINING THE COURSE OF A LANE FOR A VEHICLE
PROCÉDÉ DE DÉTERMINATION DU TRACÉ DE LA VOIE D'UN VÉHICULE

(30) Priorität: 27.08.2012 DE 102012107885
(43) Veröffentlichungstag der Anmeldung: 01.07.2015
(73) Patentinhaber: Continental Teves AG & Co. OHG, 60488 Frankfurt am Main (DE)
(72) Erfinder: STRAUSS, Matthias, 64319 Pfungstadt (DE); KOMAR, Matthias, 60433 Frankfurt (DE); WALDBAUER, Dirk, 65817 Eppstein (DE); GÜNTHER, Wolfgang, 63500 Seligenstadt (DE); LÜKE, Stefan, 61191 Rosbach vor der Höhe (DE)
(86) Internationale Anmeldenummer: PCT/DE2013/200115
(87) Internationale Veröffentlichungsnummer: WO 2014/032664

(56) Entgegenhaltungen:
- WO-A1-2010/099789
- WO-A1-2010/127650
- DE-A1-102005 002 719

## Beschreibung

Die Erfindung betrifft ein Verfahren zur Bestimmung eines Fahrspurverlaufs für ein Fahrzeug gemäß Oberbegriff des Patentanspruchs 1.

Ein solches Verfahren ist bspw. aus der DE 10 2007 013 023 A1 bekannt, bei dem die Fahrzeugumgebung mittels eines Umgebungssensors erfasst und zur Detektion von Objekten in der Fahrzeugumgebung in Gitterzellen eingeteilt. Diese Gitterzellen werden jeweils mit einem Wert belegt, der die Besetzungswahrscheinlichkeit für das Vorhandensein eines Objektes in dieser Gitterzelle angibt. So wird für eine Gitterzelle, für die kein Objekt detektiert wird oder verdeckt ist, der Wert 0 oder ein niedriger im Bereich der Wahrscheinlichkeit nahe 0 liegender Wert zugewiesen, während für eine besetzte Gitterzelle ein hoher Wert, bspw. zwischen 0,5 und 1 eingesetzt wird. Insbesondere wird bei diesem aus der DE 10 207 013 023 A1 bekannten Verfahren jeder Gitterzelle ein Wert zugewiesen, der von der Entfernung einer freien Gitterzelle von dem Fahrzeug abhängt, d. h. je weiter die freie Gitterzelle entfernt ist, desto höher wird die Besetzungswahrscheinlichkeit gewählt.

Das Koordinatensystem der mit diesem bekannten Verfahren gemäß der DE 10 2007 013 023 A1 erzeugten gitterbasierten Umgebungskarte ist drehfest mit dem globalen Koordinatensystem verbunden, so dass bei einer Bewegung des Fahrzeugs das Fahrzeug auf der zweidimensionalen Gitterstruktur der Umgebungskarte bewegt wird.

Diese derart gemäß der DE 10 2007 013 023 A1 erzeugten gitterbasierten Umgebungskarte wird zur Erkennung einer Fahrbahn, eines Fahrschlauches und/oder von Fahrbahnbegrenzungen verwendet. Hierzu wird zunächst ein Bereich auf der gitterbasierten Umgebungskarte ermittelt, in dem die Besetzungswahrscheinlichkeiten unterhalb eines vorgegebenen Wertes, bspw. 0,1 liegen. Innerhalb dieses Bereiches wird eine in Längsrichtung des Fahrzeugs verlaufende Mittellinie bestimmt, die in mehrere Teillinien unterteilt wird. Diese Teillinien werden dann senkrecht zur Richtung der Mittellinie nach beiden Seiten des Fahrzeugs verschoben, bis sie auf Gitterzellen verschoben, deren Besetzungswahrscheinlichkeiten einen bestimmten Wert, bspw. 0,5 überschreiten. Diese derart verschobenen Teillinien werden miteinander verbunden und geprüft, ob die dadurch entstehende Verbindungslinie ein für das Vorliegen einer Fahrbahn, eines Fahrschlauchs und/oder einer Fahrbahnbegrenzung gegebenes Modell beschreibt. bspw. eine Gerade, eine Klothoide, ein Polygon, ein Polynom, eine Parabel oder ein Spline.

Schließlich kann mittels der nach der DE 10 2007 013 023 A1 erzeugten gitterbasierten Umgebungskarte auch eine Eigenlokalisation des Fahrzeugs auf dieser Umgebungskarte mittels des Umgebungssensors durchgeführt werden.

Das in der DE 10 2007 013 023 A1 beschriebene Verfahren zur Bestimmung eines Fahrspurverlaufs für ein Fahrzeug führt jedoch nicht in allen Verkehrssituationen zu befriedigenden Ergebnissen, insbesondere dann nicht, wenn bei langsamer Fahrt oder bei Verdeckungen des Sichtbereichs des Umgebungssensors, insbesondere durch vorausfahrende Fahrzeuge keine oder zu wenige Messungen zur Aktualisierung der gitterbasierten Umgebungskarte vorliegen.

Ein anderes Verfahren zur Erfassung und Verfolgung (Tracking) von eine Fahrspur und/oder eine Fahrbahn begrenzenden Strukturen ist bspw. aus der DE 10 2009 003 697 A1 bekannt, bei dem mittels einer Kamera die Umgebung eines Fahrzeugs erfasst und ein Bildverarbeitungsalgorithmus eingesetzt, der Strukturen in den erfassten Bildern auswertet, die für eine Fahrspur und/oder Fahrbahn und deren Verlauf charakteristisch sind, bspw. Fahrbahnmarkierungen oder Berandungen einer Fahrbahn wie Leitplanken und dergleichen. Die eingesetzten Bildverarbeitungsalgorithmen erkennen Markierungen vor allem aufgrund der Dunkel-Hell/Hell-Dunkel-Übergange zwischen der Fahrbahnoberfläche und den Fahrbahnmarkierungen. Weiterhin wird in den Bildern nach Strukturen mit dem höchsten Kontrast gesucht, da diese meistens durch die erwähnten Übergänge erzeugt werden.

Weiterhin ist aus der Druckschrift WO2010/127650A1 ein Verfahren zur Auswertung von Sensordaten eines Umfelderfassungssystems für ein Kraftfahrzeug bekannt. Hierbei werden Detektionspunkte unabhängig von der Art des Sensors in ein zweidimensionales Belegungsgitter eingetragen.

Bei diesen bekannten Verfahren, welche Hell-Dunkel- bzw. Dunkel-Hell-Übergänge detektieren und diese an einen Filteralgorithmus weitergeben werden Filteralgorithmen verwendet, die von der Fahrzeuggeschwindigkeit abhängen, wie bspw. ein Kalmanfilter, der ein Klothoidenmodel verwendet. Die Schätzung der Spurposition basiert bei einem solchen modelbasierten Filter auf zwei Dateneingängen. Zunächst aus der Position der Messungen, zum anderen aus der Fahrzeugeigenbewegung. Kommen bei langsamer Fahrt oder Verdeckung durch das Vorderfahrzeug keine Messungen mehr an, kann das Tracking weiterlaufen und bedient sich in diesem Fall nur der Fahrzeugeigenbewegung. Ein Problem dieser Vorgehensweise ist, dass bei langsamer Fahrt ein fehlerhaft angenommener Winkel oder eine fehlerhaft geschätzte Krümmung des Spurverlaufs dazu führt, dass sich die Spur "wegdreht", d. h. bspw. dass anstatt einer Geraden eine Kurve oder umgekehrt anstatt einer Kurve ein Gerade geschätzt wird. Ein solches Verfahren ist daher ebenso nur bei höheren Fahrzeuggeschwindigkeiten nutzbar.

Der Vollständigkeit halber sei auf die DE 10 2005 002 719 A1 sowie auf die WO 2010/099789 A1 verwiesen.

Die DE 10 2005 002 719 A1 beschreibt eine Verfahren zur Kursprädikation in Fahrerassistenzsystemen für Fahrzeuge, bei dem andern von Informationen aus unterschiedlichen Informationsquellen eine Kurshypothese erstellt wird. Hierzu wird aus jeder Informationsquelle für die Kurshypothese jeweils ein Satz von Rohdaten extrahiert, diese verschiedenen Sätze von Rohdaten in einem einheitlichen Beschreibungssystem repräsentiert und diese Rohdaten zur Bildung der Kurshypothese fusioniert. Hierbei werden als geeignete Informationsquellen zur Extraktion der Rohdaten bspw. Radarsysteme, Navigationssysteme und/oder Mono- oder Stereo-Videosysteme genannt. Bei den extrahierten Sätzen von Rohdaten solcher Systeme handelt es sich bspw. um die durch Radarortung bestimmten Trajektorien anderer Fahrzeuge, Standziele am Fahrbahnrand, wie Leitplanken und dergleichen, die von einem Navigationssystem bereitgestellten Daten über den Fahrbahnverlauf und/oder der mit Hilfe eines Videosystems erkannte Verlauf von Fahrbahnmarkierungen oder sonstigen Fahrbahnbegrenzungen mit Bordsteinkanten und dergleichen.

Die WO 2010/099789 A1 beschreibt ein Verfahren zur automatischen Erkennung eines Fahrmanövers eines Fahrzeugs, insbesondere eines Überholmanövers oder eines Ausweichmanövers. Zur Durchführung dieses Verfahrens wird auf der Basis der Videodaten einer Videosensorik von einer Bildverarbeitungseinheit eine Objekt- und eine Freiflächenerkennung durchgeführt und anschließend in einer Sensorfusionseinheit diese Informationen mit den Radardaten einer Radarsensorik fusioniert. Dieses elektronische Abbild der Fahrzeugumgebung wird in einem Situationsanalyse-Modul einer Situationsanalyse unterzogen, wobei hierzu die Daten einer Fahrzeugsensorik verarbeitet werden. Diese Situationsanalyse besteht darin, ein aktuelles Fahrmanöver als Überholmanöver zu erkennen und gegebenenfalls durch eine Vorausberechnung eine Kollisionsgefahr zu bewerten. Diese Situationsanalyse dient dazu, zum einen die Durchführung des aktuellen Fahrmanövers und zum anderen das Vorliegen einer Gefahrensituation zu erkennen. Anschließend werden die Positionsdaten des Fahrzeugs sowie dessen Orientierung und Bewegung relativ zu Fahrstreifen der Fahrbahn bestimmt. Hierzu werden in einer Odometrie die Daten der Fahrzeugsensorik und die Daten einer auf den Daten der Videosensorik basierten Fahrstreifenerkennung fusioniert. Die kamerabasierte Fahrstreifenerkennung liefert eine Schätzung des relativen Gierwinkels, der Krümmung der Fahrbahn, die Fahrstreifenbreite sowie des lateralen Versatzes des Fahrzeugs gegenüber der Fahrstreifenmitte. Auf der Basis dieser geschätzten Positionsdaten sowie den Größen der Odometrie werden quer- und längsdynamische Indikatorgrößen sowie zugehörige Schwellwerte gebildet, wobei diese Schwellwerte als Kriterien sowohl zur Erkennung von Teilmanövern eines Überhol-oder eines Ausweichvorganges als auch zur Erkennung von Übergängen zwischen diesen Teilmanövern verwendet werden.

Aufgabe der Erfindung ist es, ein gegenüber dem Stand der Technik verbessertes Verfahren zur Bestimmung eines Fahrspurverlaufs für ein Fahrzeug anzugeben, welches insbesondere ein Tracking des Fahrspurverlaufs auch bei langsamer Fahrt bzw. geringen Geschwindigkeiten und bei für den Umgebungssensor verdeckten Bereichen möglich ist.

Diese Aufgabe wird gelöst durch ein Verfahren mit den Merkmalen des Patentanspruchs 1

Ein solches Verfahren zur Bestimmung eines Fahrspurverlaufs für ein Fahrzeug, bei welchem einen befahrbaren Raum begrenzende Strukturen mittels wenigstens einer Bilderfassungseinheit erfasst werden und diese Strukturen in eine Umgebungskarte eingetragen werden, welche die Fahrzeugumgebung in eine zweidimensionale Gitterstruktur von Zellen unterteilt, zeichnet sich erfindungsgemäß dadurch aus, dass
- mittels odometrischen Daten des Fahrzeugs die Position in der Gitterstruktur der Umgebungskarte bestimmt und laufend aktualisiert wird,
- der Abstand und die Richtung des Fahrzeugs zu jenen Zellen der Gitterstruktur der Umgebungskarte bestimmt werden, welche die Fahrbahn und/oder die Fahrspur begrenzenden und nichtüberfahrbaren Strukturen aufweisen,
- Hell-Dunkel- und Dunkel-Hell-Übergänge in der von der Bilderfassungseinheit erzeugten Bilddaten detektiert und in die Zellen der Gitterstruktur der Umgebungskarte eingetragen werden, und
- der Fahrspurverlauf aus den Zellen mit den detektierten Hell-Dunkel- und Dunkel-Hell-Übergängen bestimmt wird.

Als einen befahrbaren Raum begrenzende Strukturen werden sowohl die eine Fahrbahn bzw. eine Fahrspur begrenzende Strukturen als auch bspw. einen Parkplatz begrenzende Strukturen, wie Fahrbahnbegrenzungen, bspw. Randsteine, Grünstreifen, Fahrbahnmarkierungen bzw. Linienmarkierungen auf der Fahrbahnmitte oder Fahrbahnseite usw. und Verkehrszeichen, einschließlich Leitpfosten usw. verstanden.

Mit diesem erfindungsgemäßen Verfahren wird die Spurinformation bei sehr niedrigen Geschwindigkeiten und auch bei geringen Abständen zu vorausfahrenden Fahrzeug, durch die bspw. Linienmarkierungen verdeckt werden, erhalten.

Dadurch dass alle Hell-Dunkel-und Dunkel-Hell-Übergänge in die Gitterzellen der Umgebungskarte eingetragen werden, können die Spurmarkierungen verfolgt ("getrackt") werden, wobei in vorteilhafter Weise zunächst alle Formen von Spurmarkierungen erfasst werden können, d. h. auch Hell-Dunkel-und Dunkel-Hell-Übergänge, die aus anderen Straßenmarkierungen entstehen, wie z. Bsp. Abbiegepfeile, Verkehrszeichen mit Geschwindigkeitsinformationen oder Zebrastreifen usw. Vorteilhaft ist auch aufgrund der Verwendung einer gitterbasierten Umgebungskarte, dass bereits von dem Fahrzeug passierte Spurmarkierungen in das Verfahren mit einbezogen werden können. Die Fehlerrate bei der Erkennung der Spurmarkierung ist äußerst gering, da die Ablage des Fahrzeugs gegenüber der Spurmitte, die Winkellage des Fahrzeugs und die Krümmung einer Spurmarkierung laufend aktualisiert wird.

Nach einer vorteilhaften Ausgestaltung der Erfindung ist es vorgesehen, dass bei fehlenden Bilddaten aus der vor dem Fahrzeug liegenden Umgebung der bestimmte Fahrspurverlauf in die vor dem Fahrzeug liegende Umgebung extrapoliert wird. Der derart geschätzte weitere Verlauf der Fahrspur bzw. der Fahrbahn ist besonders vorteilhaft, wenn sich das Fahrzeug im städtischen Verkehr, insbesondere im dichten Verkehr oder in dichter Bebauung bewegt.

Erfindungsgemäß wird für die Umgebungskarte ein ortsfestes Koordinatensystem verwendet. Dadurch werden Diskretisierungsfehler bei der Bildverarbeitung und Erzeugung der gitterbasierten Umgebungskarte minimiert.

Das erfindungsgemäße Verfahren wird besonders dadurch effizient, wenn Hell-Dunkel- und Dunkel-Hell-Übergänge detektiert werden, die in einer Linienstruktur vorliegen. Dadurch werden insbesondere Fahrbahnränder und Fahrbahnränder bzw. Fahrspurbegrenzungen in Form Linienmarkierungen schnell und einfach erfasst.

Das erfindungsgemäße Verfahren wird erfindungsgemäß besonders dadurch robust, wenn die Gitterzellen der Umgebungskarte als überfahrbar oder nicht überfahrbar klassifiziert werden. Hierzu werden die aus den Bilddaten der Bilderfassungseinheit detektierbaren Strukturen und Objekte der Umgebung erfasst und in die Gitterzellen eingetragen.

Die odometrischen Daten werden weiterbildungsgemäß mittels fahrzeugeigenen Sensoren ermittelt, die in der Regel in Fahrzeugen, insbesondere Kraftfahrzeuge bereits vorhanden sind.

Weiterhin ist es gemäß einer bevorzugten Weiterbildung der Erfindung vorgesehen, dass zur Bestimmung der Position des Fahrzeugs in der Gitterstruktur der Umgebungskarte neben den odometrischen Daten zusätzlich der optische Fluss aus den Bilddaten der Bilderfassungseinheit verwendet wird. Dadurch können Fahrzeugzustände, wie durchdrehende Räder oder Rutschen des Fahrzeugs berücksichtigt werden.

Schließlich können nach einer letzten Ausgestaltung der Erfindung mit der Bilderfassungseinheit zum Fahrzeug parallel fahrende Fahrzeuge erfasst werden, die Abstände quer zur Fahrtrichtung des Fahrzeugs zu den parallel fahrenden Fahrzeugen bestimmt und die ermittelten Abstände zu den parallel fahrenden Fahrzeugen zur Verifikation des bestimmten Fahrspurverlaufs verwendet werden. Dadurch wird in vorteilhafte Weise die Spurerkennung unterstützt.

Die Erfindung wird nachfolgend unter Bezugnahme auf die beigefügten Figuren näher erläutert. Es zeigen:
- Figur 1: eine schematische Darstellung eines Fahrzeugs mit einer Bilderfassungseinheit zur Erläuterung des erfindungsgemäßen Verfahrens, und
- Figur 2: eine schematische Darstellung einer mit dem erfindungsgemäßen Verfahren erzeugt gitterbasierten Umgebungskarte eines Fahrzeugs, und
- Figur 3: ein Ablaufdiagramm zur Erzeugung einer gitterbasierten Umgebungskarte gemäß Figur 2 mittels des fahrzeuggebundenen Bildaufnahmesystems nach Figur 1 als Ausführungsbeispiel gemäß der Erfindung.

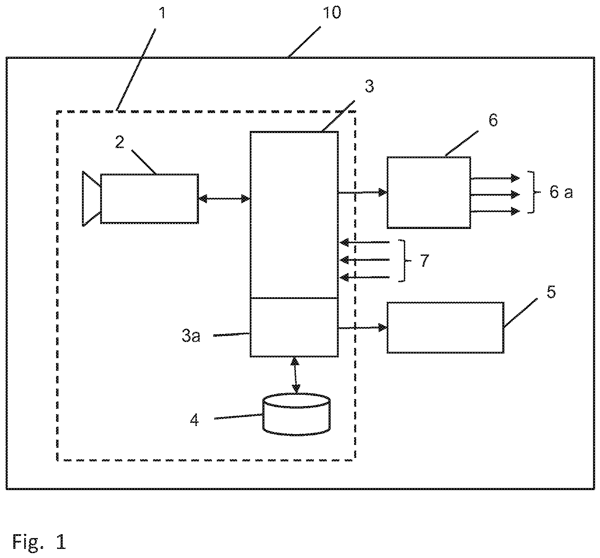

Das in Figur 1 schematisch dargestellte Fahrzeug 10, insbesondere ein Kraftfahrzeug umfasst ein Bildaufnahmesystem 1 mit einer Kamera 2 als Bilderfassungseinheit, eine Objekterkennungseinheit 3 zur Erkennung von Objekten aus den von der Kamera 2 aufgenommenen Bilddaten, wobei der Objekterkennungseinheit 3 ein Speicher 4 zugeordnet ist. Zur Objekterkennung weist die Objekterkennungseinheit 3 einen Klassifikator 3a auf, mit dem mittels eines Mustererkennungsalgorithmus eine Klassifikation erkannter Strukturen und Objekte, insbesondere von in den von der Kamera 2 erzeugten Bilddaten erkannten Objekten am Fahrbahnrand vorgenommen wird. So können nicht nur die Fahrbahn bzw. die Fahrspur begrenzende Strukturen, wie Fahrbahnmarkierungen, Fahrbahnbegrenzungen, wie Leitplanken und Randsteine sowie Verkehrszeichen, sondern bspw. auch vorausfahrende oder parallelfahrende Fahrzeuge, Rücklichter, Scheinwerfer usw. erkannt werden.

Ferner wird von dem Bildaufnahmesystems 1 auch der Fahrspurverlauf bzw. der Fahrbahnverlauf des Fahrzeugs 10 bestimmt und für Fahrerassistenzfunktionen verwendet. So ist bspw. ein Fahrerassistenzsystem 6 vorgesehen, welches als Spurhalteassistenzsystem ausgebildet, dem die für die Spurhaltung erforderlichen Informationen hinsichtlich des erkannten Straßenverlaufs zugeführt werden und ggf. Eingriffe in das Brems-und/oder Lenksystem des Fahrzeugs 10 über Stellorgane 6a vornimmt.

Ferner umfasst das Fahrzeug 10 ein Display 5, welches bspw. ein Teil einer zentralen Anzeige- und Bedieneinheit des Fahrzeugs 10 oder ein Kombiinstrument des Fahrzeugs 10 darstellt, welches die von der Objekterkennungseinheit 3 erkannten Objekte, bspw. Verkehrszeichen anzeigt und deshalb mit derselben verbunden ist. Desweiteren werden auch optische und/oder akustische Warnhinweise für den Fahrer angezeigt bzw. erzeugt, wenn ein ungewolltes Verlassen der erkannten Fahrspur bzw. der Fahrbahn detektiert wird.

Schließlich werden auch odometrische Daten des Fahrzeugs 10 zu dessen Bewegungsschätzung dem Bildaufnahmesystem 1 zugeführt, wobei hierzu Fahrzeugsensoren 7 bspw. die Gierrate, den Lenkwinkel und die Raddrehzahlen des Fahrzeugs erfassen.

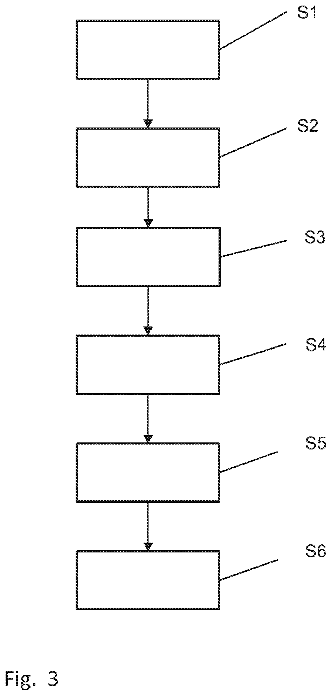

Im Folgenden wird als Ausführungsbeispiel der Erfindung ein Verfahren zur Bestimmung des Fahrspurverlaufs des Fahrzeugs 10 in einer Verkehrsumgebung anhand der Figuren 1, 2 und 3 beschrieben und erläutert.

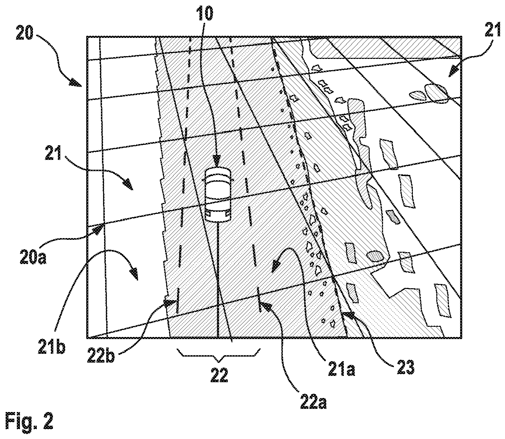

In einem ersten Verfahrensschritt S1 wird die von der Kamera 2 erfasste Fahrzeugumgebung 20 in Form der Bilddaten mittels eines ortsfesten bzw. globalen Gitters 20a mit jeweils gleicher Maschengröße in Gitterzellen 21 gerastert. Eine solche gemäß Figur 2 dargestellte gitterbasierte Umgebungskarte 20 diskretisiert die von der Kamera 1 erfasste Umgebung, wobei aus übersichtlichkeitsgründen nur jede zehnte Gitterlinie eingetragen ist.

In einem nächsten Verfahrensschritt S2 werden Objekte aus den Bilddaten der Kamera 2 erfasst, mittels des Klassifikators 3a klassifiziert und in die Gitterzellen 21 mit einer Belegungswahrscheinlichkeit eingetragen. In Abhängigkeit des Wertes der Belegungswahrscheinlichkeit, bspw. bei einem Wert ≥ 0,5 erhalten die Gitterzellen 21 den Status nichtüberfahrbar (Gitterzellen 21b) und "überfahrbar" (Gitterzellen 21a). Gemäß Figur 2 sind die nichtüberfahrbaren Gitterzellen 21b dunkler dargestellt als die überfahrbaren Gitterzellen 21a.

In diese gitterbasierte Umgebungskarte 20 wird gemäß eines nächsten Verfahrensschrittes S3 die von den Sensoren 7 erzeugten odometrischen Daten erfasst und die Position des Fahrzeugs 10 in die entsprechende Gitterzelle 21a eingetragen. Mit den laufend erzeugten odometrischen Daten wird die Bewegung des Fahrzeugs 10 geschätzt und dessen Position auf der Umgebungskarte 20 entsprechend der Bewegungsschätzung verschoben.

Zur Bewegungsschätzung des Fahrzeugs 10 können neben den odometrischen Daten, wie Gierwinkel, Lenkwinkel und Raddrehzahlen auch zusätzlich Informationen aus dem optischen Fluss der Kamera 2 zur Absicherung der geschätzten Position verwendet werden.

Mit der in die Gitterstruktur 20a der Umgebungskarte 20 eingetragenen Position des Fahrzeugs 10 kann mit einem weiteren Verfahrensschritt S4 der Abstand und die Richtung des Fahrzeugs 10 zu den nichtüberfahrbaren Gitterzellen 21b, die die Fahrspur und/oder Fahrbahn begrenzenden Strukturen aufweisen, bestimmt werden.

In einem nachfolgenden Verfahrensschritt S5 werden alle in einer Linienstruktur vorliegenden Hell-Dunkel- sowie Dunkel-Hell-Übergänge erfasst und ebenso in die Umgebungskarte 20 eingetragen (vgl. Figur 2) sowie in einem letzten Verfahrensschritt S7 als Spurmarkierungen 22a und 22b einer Fahrspur 22 und als rechte Fahrbahnmarkierung 23 identifiziert sowie durch Anwendung eines Partikelfilters getrackt; dabei werden auch die bereits von dem Fahrzeug 10 passierten Spurmarkierungen 22a, 22b und die Fahrbahn begrenzenden Strukturen 23 in die Bestimmung des Fahrspurverlaufs des Fahrzeugs 10 mit einbezogen werden. Selbst bei niedrigen Geschwindigkeiten ermöglicht das beschriebene Verfahren ein Tracken der Spurmarkierungen 22a, 22b und der die Fahrbahn begrenzenden Strukturen 23.

Mit diesem Verfahren können auch Hell-Dunkel- sowie Dunkel-Hell-Übergänge erfasst werden, die aus anderen Straßenmarkierungen hervorgehen, wie z. Bsp. Abbiegepfeile, Geschwindigkeitsinformationen von Verkehrszeichen oder Zebrastreifen usw.

Bei fehlenden Bilddaten, bspw. aufgrund von Verdeckungen durch vorausfahrende Fahrzeuge wird der bisher bestimmte Fahrspurverlauf 22 bzw. Fahrbahnverlauf 23 in die vor dem Fahrzeug 10 liegende Umgebung extrapoliert.

Das dargestellte Verfahren kann auch dadurch hinsichtlich der Bestimmung des Fahrspurverlaufs des Fahrzeugs 10 verbessert werden, dass parallel fahrende Fahrzeuge erfasst werden, so dass verhindert werden kann, dass ein solches parallel fahrende Objekt bei einer Spurverengung durch das Fahrzeug 10 berührt wird.

In dem oben beschriebenen Ausführungsbeispiel wird als Bilderfassungseinheit ein Videobild erzeugende Kamera 2, die auch eine Stereokamera darstellen kann verwendet. Anstelle einer solchen Kamera 2 kann zur Durchführung des erfindungsgemäßen Verfahrens auch ein Laserscannerdaten erzeugender Laser eingesetzt werden.

### Bezugszeichen

- 1: Bildaufnahmesystem
- 2: Bilderfassungseinheit, Kamera
- 3: Objekterkennungseinheit
- 3a: Klassifikator
- 4: Speicher
- 5: Display
- 6: Fahrerassistenzsystem
- 6a: Stellmittel des Fahrerassistenzsystems 6
- 7: Fahrzeugsensoren
- 10: Fahrzeug, Kraftfahrzeug

- 20: Umgebungskarte
- 20a: ortsfeste Gitter der Umgebungskarte 20
- 21: Gitterzelle der Umgebungskarte 20
- 21a: überfahrbare Gitterzelle 21
- 21b: nicht überfahrbare Gitterzelle 21
- 22: Fahrspur des Fahrzeugs 10
- 22a: rechte Fahrspurmarkierung
- 22b: linke Fahrspurmarkierung
- 23: rechte Fahrbahnmarkierung

## Patentansprüche

1. Verfahren zur Bestimmung eines Fahrspurverlaufs für ein Fahrzeug (10), bei welchem einen befahrbaren Raum begrenzende Strukturen mittels wenigstens einer Bilderfassungseinheit (2) erfasst werden und diese Strukturen in eine Umgebungskarte (20) eingetragen werden, welche die Fahrzeugumgebung in eine zweidimensionale Gitterstruktur (20a) von Zellen (21) unterteilt,
**dadurch gekennzeichnet, dass**
- mittels odometrischen Daten des Fahrzeugs (10) die Position des Fahrzeugs (10) in der Gitterstruktur (21) der Umgebungskarte (20) bestimmt und laufend aktualisiert wird, wobei für die Umgebungskarte ein ortsfestes Koordinatensystem verwendet wird, wobei Objekte aus Bilddaten der Bilderfassungseinheit (2) erfasst, mittels eines Klassifikators (3a) klassifiziert und in die Gitterszellen (21) mit einer Belegungswahrscheinlichkeit eingetragen werden, wobei in Abhängigkeit des Wertes der Belegungswahrscheinlichkeit die Gitterzellen (21) den Status nichtüberfahrbar und überfahrbar erhalten,
- der Abstand und die Richtung des Fahrzeugs (10) zu jenen Zellen (21b) der Gitterstruktur (20a) der Umgebungskarte (20) bestimmt werden, welche die Fahrbahn und/oder die Fahrspur begrenzenden und nichtüberfahrbaren Gitterzellen aufweisen,
- Hell-Dunkel- und Dunkel-Hell-Übergänge in der von der Bilderfassungseinheit (2) erzeugten Bilddaten detektiert und in die Zellen (21) der Gitterstruktur (20a) der Umgebungskarte (20) eingetragen werden, und
- der Fahrspurverlauf (22) aus den Zellen mit den detektierten Hell-Dunkel- und Dunkel-Hell-Übergängen bestimmt wird.

2. Verfahren nach Anspruch 1,
**dadurch gekennzeichnet, dass** bei fehlenden Bilddaten aus der vor dem Fahrzeug (10) liegenden Umgebung der bestimmte Fahrspurverlauf (22) in die vor dem Fahrzeug (10) liegende Umgebung extrapoliert wird.

3. Verfahren nach einem der vorhergehenden Ansprüche,
**dadurch gekennzeichnet, dass** als Hell-Dunkel- und Dunkel-Hell-Übergänge detektiert werden, die in einer Linienstruktur vorliegen.

4. Verfahren nach einem der vorhergehenden Ansprüche,
**dadurch gekennzeichnet, dass** die odometrischen Daten mittels fahrzeugeigenen Sensoren (7) ermittelt werden.

5. Verfahren nach einem der vorhergehenden Ansprüche, **dadurch gekennzeichnet, dass** zur Bestimmung der Position des Fahrzeugs (10) in der Gitterstruktur (20a) der Umgebungskarte (20) neben den odometrischen Daten der optische Fluss aus den Bilddaten der Bilderfassungseinheit (2) verwendet wird.

6. Verfahren nach einem der vorhergehenden Ansprüche, **dadurch gekennzeichnet, dass**
- mit der Bilderfassungseinheit (2) zum Fahrzeug (10) parallel fahrende Fahrzeuge erfasst werden,
- die Abstände quer zur Fahrtrichtung des Fahrzeugs (10) zu den parallel fahrenden Fahrzeugen bestimmt werden, und
- die ermittelten Abstände zu den parallel fahrenden Fahrzeugen zur Verifikation des bestimmten Fahrspurverlaufs (22) verwendet werden.

## Claims

1. A method for determining a lane course for a vehicle (10), in which structures delimiting a drivable space are captured by means of at least one image capturing unit (2) and these structures are entered in a map of the surroundings (20), which divides the vehicle's surroundings into a two-dimensional grid structure (20a) of cells (21), **characterised in that**
- the position of the vehicle (10) within the grid structure (21) of the map of the surroundings (20) is determined by means of the odometric data of the vehicle (10) and is updated continuously, wherein a fixed coordinate system is used for the map of the surroundings, wherein objects are captured from image data of the image capturing unit (2), are classified by means of a classifier (3a) and are entered in the grid cells (21) with an occupancy probability, wherein, depending on the value of the occupancy probability, the grid cells (21) receive the status non-traversable and traversable,
- the distance and the direction of the vehicle (10) to those cells (21b) of the grid structure (20a) of the map of the surroundings (20) which have grid cells which delimit the carriageway and/or the lane and which are non-traversable,
- light-dark and dark-light transitions are detected in the image data generated by the image capturing unit (2) and are entered in the cells (21) of the grid structure (20a) of the map of the surroundings (20), and
- the lane course (22) is determined from the cells with the detected light-dark and dark-light transitions.

2. The method according to Claim 1,
**characterised in that**, in the absence of image data from the surroundings in front of the vehicle (10), the determined lane course (22) is extrapolated in the surroundings in front of the vehicle (10).

3. The method according to any one of the preceding claims, **characterised in that** are detected as light-dark and dark-light transitions, which exist in a linear structure.

4. The method according to any one of the preceding claims, **characterised in that** the odometric data are identified by means of the vehicle's own sensors (7).

5. The method according to any one of the preceding claims, **characterised in that**, in addition to the odometric data, the optical flow from the image data of the image capturing unit (2) are used to determine the position of the vehicle (10) within the grid structure (20a) of the map of the surroundings (20).

6. The method according to any one of the preceding claims, **characterised in that**
- vehicles moving parallel to the vehicle (10) are captured by the image capturing unit (2),
- the distances to the vehicles moving parallel are determined perpendicular to the travel direction of the vehicle (10), and
- the distances to the vehicles moving parallel are used to verify the determined lane course (22).

## Revendications

1. Procédé de détermination d'une voie de circulation pour un véhicule (10), où des structures délimitant un espace carrossable sont détectées par au moins une unité de prise de vue (2) et où lesdites structures sont enregistrées dans une carte d'environnement (20) divisant l'environnement du véhicule en une structure de grille (20a) de cellules (21) bidimensionnelle,
**caractérisé**
- **en ce qu'**au moyen de données odométriques du véhicule (10), la position du véhicule (10) dans la structure de grille (21) de la carte d'environnement (20) est déterminée et couramment actualisée, un système de coordonnées fixe étant utilisé pour la carte d'environnement, des objets étant détectés à partir des données d'image de l'unité de prise de vue (2), classés au moyen d'un classificateur (3a) et enregistrés dans les cellules de grille (21) avec une probabilité d'occupation, le statut non carrossable et carrossable étant reçu aux cellules de grille (21) en fonction de la valeur de la probabilité d'occupation,
- **en ce que** la distance et la direction du véhicule (10) sont déterminées par rapport aux cellules (21b) de la structure de grille (20a) de la carte d'environnement (20) qui présentent des structures délimitant la chaussée et/ou la voie et non carrossables,
- **en ce que** des transitions clarté-obscurité et obscurité-clarté sont détectées dans les données d'image générées par l'unité de prise de vue (2) et enregistrées dans les cellules (21) de la structure de grille (20a) de la carte d'environnement (20), et
- **en ce que** la voie de circulation (22) est déterminée à partir des cellules présentant les transitions clarté-obscurité et obscurité-clarté détectées.

2. Procédé selon la revendication 1,
**caractérisé en ce que** qu'en cas d'absence de données d'image de l'environnement en avant du véhicule (10), la der voie de circulation (22) déterminée est extrapolée dans l'environnement en avant du véhicule (10).

3. Procédé selon l'une quelconque des revendications précédentes,
**caractérisé en ce que** sont détectées en tant que transitions clarté-obscurité et obscurité-clarté, lesquelles sont présentées dans une structure linéaire.

4. Procédé selon l'une quelconque des revendications précédentes, **caractérisé en ce que** les données odométriques sont identifiée au moyen de capteurs (7) embarqués dans le véhicule.

5. Procédé selon l'une quelconque des revendications précédentes, **caractérisé en ce que** pour la détermination de position du véhicule (10) dans la structure de grille (20a) de la carte d'environnement (20), le flux optique est utilisé en plus des données odométriques à partir des données d'image de l'unité de prise de vue (2).

6. Procédé selon l'une quelconque des revendications précédentes, **caractérisé en ce que**
- des véhicules circulant parallèlement au véhicule (10) sont détectés par l'unité de prise de vue (2),
- les distances aux véhicules circulant parallèlement sont déterminées perpendiculairement au sens de marche du véhicule (10), et
- les distances déterminées par rapport aux véhicules circulant parallèlement sont exploitées pour la vérification de la voie de circulation (22) déterminée.
